# EUROPEAN PATENT APPLICATION

(11) **EP 1 592 240 A2**
(43) Date of publication of application: **02.11.2005**
(21) Application number: 05102527.8
(22) Date of filing: 30.03.2005
(51) Int. Cl.: H04N 5/761

(54) **Electronic apparatus and information notifying method**

(30) Priority: 28.04.2004 JP 2004134494
(71) Applicant: KABUSHIKI KAISHA TOSHIBA, Tokyo (JP)
(72) Inventor: Uehara, Keiichi, c/o Toshiba Corp. I.P.D., 105-8001, Tokyo (JP); Tsuji, Tadashi, c/o Toshiba Corp. I.P.D., 105-8001, Tokyo (JP); Saito, Toshimitsu, c/o Toshiba Corp. I.P.D., 105-8001, Tokyo (JP)
(74) Representative: Henkel, Feiler & Hänzel

(57) **Abstract**

An electronic apparatus has a plurality of operating systems. The apparatus includes a setting unit (42) which preselects a program to be displayed or recorded under control of a first operating system (41), and a notifying unit (62) which makes a notification as to whether the setting unit (42) preselects the program while an application program is being executed under control of a second operating system (51).

## Description

The present invention relates to an electronic apparatus having a plurality of operating systems and an information notifying method.

Some electronic devices such as personal computers (PC) have a plurality of operating systems (OS). However, the operating systems cannot start up at once, but only one starts up. For example, Jpn. Pat. Appln. KOKAI Publication No. 2001-243076 discloses a technology for automatically loading and executing one of a plurality of operating systems.

Some of recent personal computers have a TV tuner and a DVD drive that can be preset to record TV programs. In these personal computers, the following situation can be considered. A user presets a DVD to record a program under the control of a first OS and shuts down the OS. Then, the user starts a specific application for playback by a second OS in order to enjoy another video content recorded on the DVD.

However, the user is often likely to forget that the DVD was preset to record the program while he or she is enjoying the video content. (If one of two users presets a DVD to record a program, the other may not notice that.) The user continues to view the video content even after the preselected time for recording. The first OS does not start up; consequently, the preselected program is not recorded.

The above problem occurs frequently if a user who starts up a first OS to preset a PC to record a program and a user who starts up a second OS to enjoy a video content are different when the PC is used by a family.

It us thus desired to provide a technology capable of preventing the recording of a preselected program from being canceled against a user's will.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a perspective view of the outward appearance of an electronic apparatus according to an embodiment of the present invention.
FIG. 2 is a block diagram of the configuration of the electronic apparatus according to the embodiment of the present invention.
FIG. 3 is a block diagram of functions for notifying a user of information about recording programming.
FIG. 4 is an illustration showing an example of a message screen indicative of recording programming.
FIG. 5 is an illustration showing an example of a screen for setting a notice time by a user.
FIG. 6 is a flowchart showing an example of a recording programming operation.
FIG. 7 is a flowchart showing an example of an operation of a BIOS.
FIG. 8 is a flowchart showing an example of an operation of an AV playback application.

An embodiment of the present invention will be described with reference to the accompanying drawings.

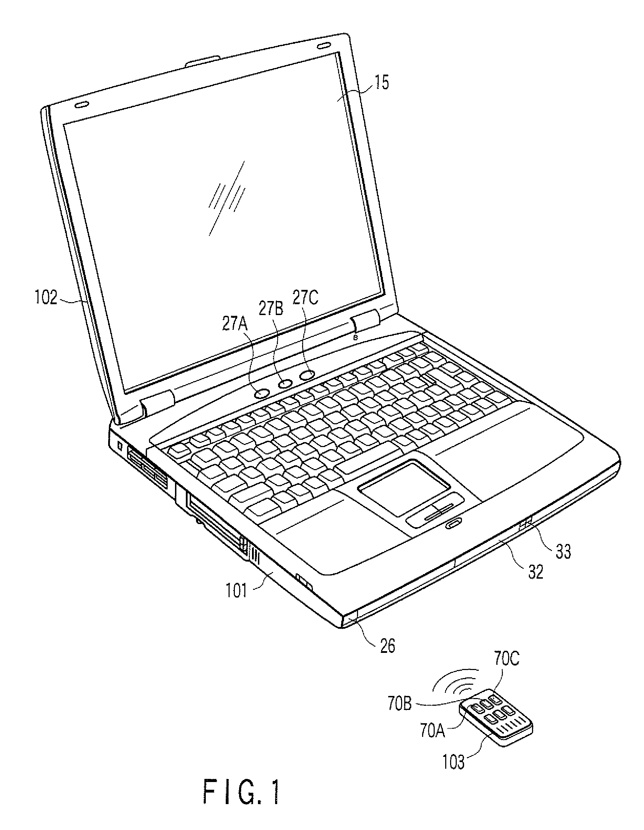

FIG. 1 is a perspective view of the outward appearance of an electronic apparatus according to an embodiment of the present invention.

The electronic apparatus is, for example, a personal computer (PC) and includes a main unit 101 and a display unit 102. The display unit 102 has a liquid crystal display (LCD) 15 to display information. The main unit 101 has an infrared (IR) receiving unit 26 for receiving an infrared signal from a remote control 103 under input operation. The main unit 101 also has a power switch 27A, a DVD switch 27B, a TV switch 27C, a sub-LCD 32 and an LED 33, which will be described later.

The remote control 103 includes a power switch 70A, a DVD switch 70B and a TV switch 70C whose functions are the same as those of the above power switch 27A, DVD switch 27B and TV switch 27C.

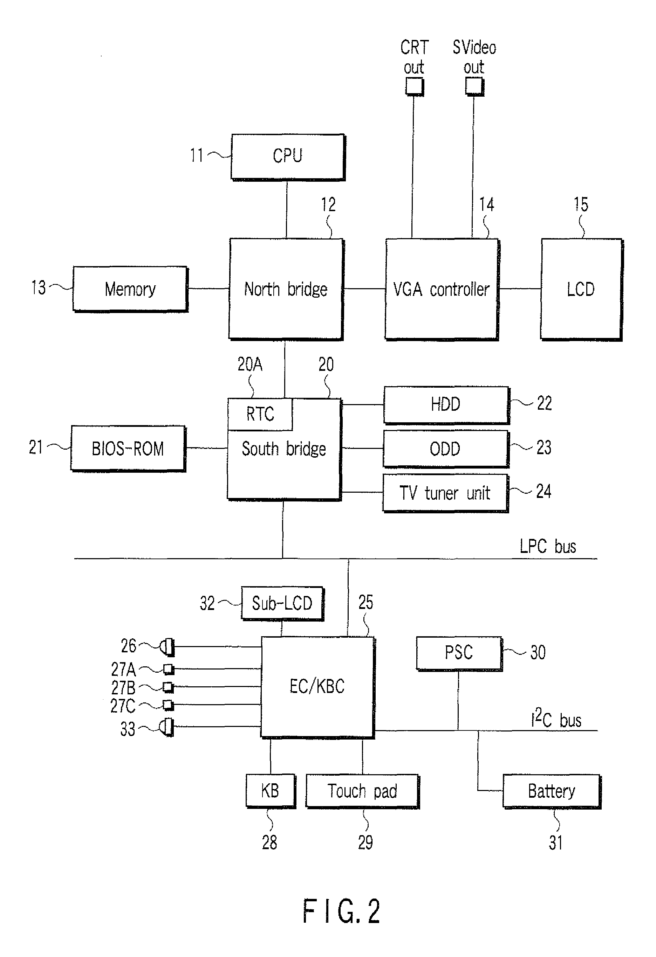

FIG. 2 is a block diagram of the configuration of the electronic apparatus. The same components as those shown in FIG. 1 are denoted by the same reference numerals.

A CPU 11 is a processor for controlling the entire electronic apparatus and performs various processes in accordance with different programs.

A north bridge 12 is a bridge unit having functions of controlling a memory 13 and a VGA controller 14 as well as a function of interfacing with the CPU 11 and that of hub-interfacing with a south bridge 20.

The memory 13 stores operating systems (OS), different programs and drivers. It corresponds to the main memory used as a work area for the CPU 11.

The VGA controller 14 forms a video signal (normally an LVDS signal) that can be displayed on a display device (e.g., LCD 15) in response to a signal supplied from the north bridge 12, and outputs the formed video signal. An interface for supplying a video signal to a cathode ray tube (CRT) is connected to the VGA controller 14, as is an interface for outputting an S video signal.

The LCD 15 displays on its screen information such as video in response to a signal supplied from the VGA controller 14.

The south bridge 20 is a bridge unit having not only a function of hub-interfacing with the north bridge 12, but also functions of controlling various units connected thereto, a low pin count (LPC) bus, and a peripheral component interconnect (PCI) bus. The south bridge 20 includes a real time clock (RTC) 20A used for setting information such as a preselected time for recording a program acquired by a TV tuner unit 24.

A BIOS-ROM 21 is a memory for storing a basic input/output system (BIOS).

A hard disk drive (HDD) 22 stores operating systems, different programs, data and the like.

An optical disk drive (ODD) 23 drives a digital versatile disk (DVD) on which, e.g., video contents are recorded.

The TV tuner unit 24 includes a TV tuner, a national television system committee/phase alternation by line (NTSC/PAL) decoder, an MPEG2 encoder and an antenna to acquire TV video contents.

An embedded controller/keyboard controller (EC/KBC) 25 is configured by integrating an embedded controller and a keyboard controller with each other and manages the power supply and processes signals from an input device.

The EC manages the power supply for each of the components of the electronic apparatus based on different items of information held in an embedded register. The EC senses the depression of the switches 27A, 27B and 27C and that of the switches 70A, 70B and 70C on the remote control 103 through the receiving unit 26, and performs a process corresponding to the sensed depression and instructs a component to do the process. The EC can display the status of recording programming on the sub-LCD 32 and notify a user of the status in the form of blink and lighting through the LED 33.

The receiving unit 26 receives a signal indicative of the depression of the switches 70A, 70B and 70C on the remote control 103 and notifies the EC/KBC 25 of it.

The power switch 27A is a switch to turn on/off the power supply of the main unit of the electronic apparatus. The DVD switch 27B is a switch to start/stop the playback of a DVD driven by the ODD. The TV switch 27C is a switch to start/stop receiving TV pictures from the TV tuner unit 24.

A keyboard 28 and a touch pad 29 are input units to send out a signal to the KBC in accordance with an input operation.

A power supply controller (PSC) 30 controls power to be supplied to the respective components of the electronic apparatus and is controlled by the EC through an I²C bus. A battery 31 is a rechargeable one and used when no AC power supply is used.

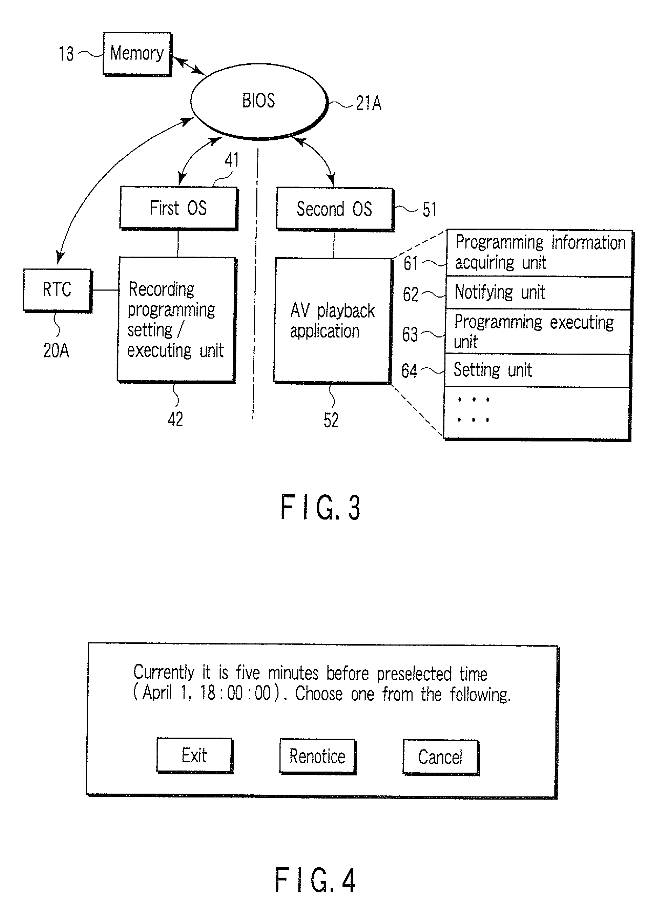

FIG. 3 is a block diagram of functions for notifying a user of information about recording programming.

The HDD 22 stores a first OS 41 and a second OS 51. The first OS 41 corresponds to, for example, Windows ®, while the second OS 51 corresponds to, for example, Linux. Only one of the operating systems can start up according to user's selection.

A recording programming setting/executing unit 42 is an application that is executed under the control of the first OS 41 to preselect and record a TV program. When a user presets the HDD 22 to record a TV program, the unit 42 sets information indicative of a preselected time to the RTC 20A.

The BIOS 21A reads the information out of the RTC 20A and stores it in the memory 13 from when the electronic apparatus turns on until the hardware is completely initialized. After the initialization, for example, the second OS 51 start up. If the second OS 51 inquires of the BIOS 21A a preselected time, the BIOS 21A returns the information on the preselected time to the second OS 51 from the memory 13. If there is no information on the preselected time, the BIOS 21A returns a message to that effect.

The started second OS 51 executes an AV playback application 52 for viewing a content including pictures. The present embodiment is directed to the use of the AV playback application; however, it can be replaced with other types of applications.

The application 52 has various functions of a programming information acquiring unit 61, a notifying unit 62, a programming executing unit 63 and a setting unit 64.

When the application 52 starts up, the programming information acquiring unit 61 inquires of the BIOS 21A the status of recording programming and acquires information indicating the presence or absence of the recording programming and a preselected time for recording.

The notifying unit 62 notifies a user of at least the above presence or absence of recording programming while the application 52 is being executed under the control of the second OS 51. If the HDD is programmed for recording, the notifying unit 62 notifies the user of it on the display screen in the form of a message or an icon a predetermined time (several minutes) before the above preselected time. In this notification, the notifying unit 62 can display information indicating a preselected time (e.g., April 1, 18:00:00) and information indicating a time interval (e.g., five minutes) between the present time and the preselected time on the screen, as shown in FIG. 4. The notifying unit 62 can also display a confirmation as to whether a preselected program should be recorded ("Exit" button), a confirmation as to whether the notification should be made again ("Renotice" button), and a confirmation as to whether such notification should be ignored to cancel the recording programming ("Cancel" button). The notification can be made a plurality of number of times on the time series. It can also be made in the form of blink and lighting through the LED 33 or displayed on the sub-LCD 32.

When a user depresses the "Exit" button (FIG. 4) displayed by the notifying unit 62, the programming executing unit 63 determines that the preselected program should be recorded to terminate the application 52 and shut down the second OS 51. The unit 63 instructs the first OS 41 to start up through the BIOS 21A.

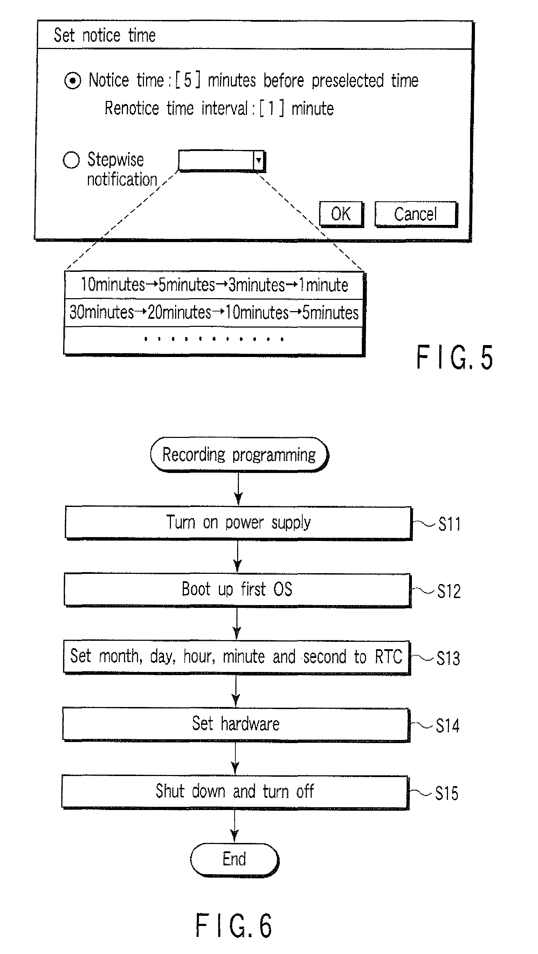

The setting unit 64 displays a screen for setting a time at which the above notification is to be made. This operation will be described with reference to FIG. 5.

FIG. 5 shows an example of a screen for setting a notice time by a user.

In the example of FIG. 5, a notification is made "five minutes before" the preselected time and then "every one minute." A stepwise notification can be selected. For example, a notification is made "ten minutes before" the preselected time and then "five minutes before," "three minutes before," and "one minute before." Alternatively, a notification is made "thirty minutes before" the preselected time and then "twenty minutes before," "ten minutes before," and "five minutes before."

An example of an operation for programming the hardware to record a program will be described with reference to FIG. 6.

When the power supply turns on (step S11), the BIOS 21A initializes the hardware to boot up, e.g., the first OS 41 (step S12). Then, the recording programming setting/executing unit 42 boots up as an application used for programming the hardware to record a program.

When a user inputs a preselected time (month, day, hour, minute, and second) for recording, the unit 42 sets it to the RTC 20A (step S13). The hardware is set such that the preselected time becomes equal to wake-up information when an interrupt occurs (step S14).

After that, the first OS 41 shuts down and the power supply turns off (step S15).

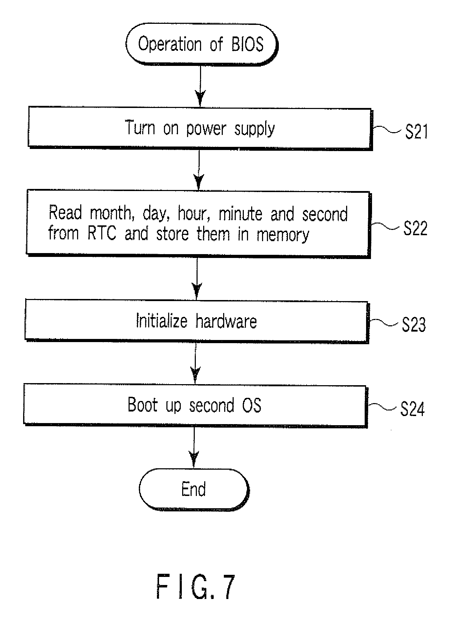

An example of an operation of the BIOS 21A will be described with reference to FIG. 7.

After the operation shown in FIG. 6, the power supply turns on (step S21). Thus, the BIOS 21A reads the above preselected time (month, day, hour, minute, and second) from the RTC 20A and stores it in the memory 13 (step S22).

The BIOS 21A initializes the hardware (step S23). Then, for example, the second OS 51 boots up (step S24).

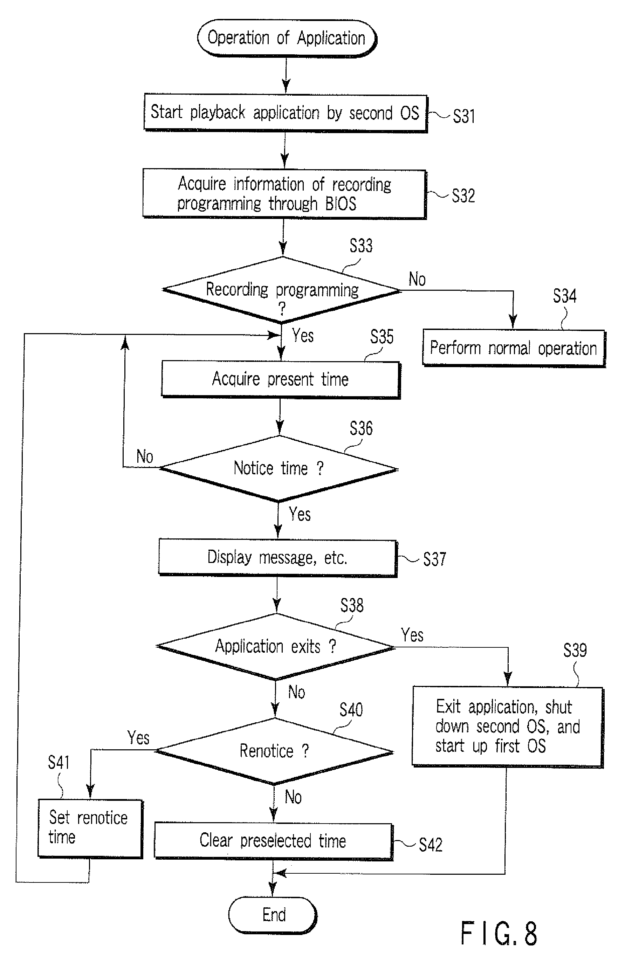

An example of an operation of the AV playback application 52 will be described with reference to FIG. 8.

After the operation shown in FIG. 7, the AV playback application 52 starts up under the control of the second OS 51 (step S31).

When the application 52 inquires of the BIOS 21A the status of recording programming, the BIOS 21A reads information from the memory 13 and sends it to the application 52 (step S32).

The application 52 determines whether the above information represents the presence or absence of recording programming (i.e., a preselected time) (step S33). If the information represents the absence, no recording programming is made and thus the operation shifts to a normal one (step S34). If the information represents the presence, the application 52 acquires information about the present time and stands by until the present time reaches a notice time (a time when a notification should be made) (steps S35 and S36).

When the present time reaches the notice time, the application 52 displays a message as shown in FIG. 4 (step S37) and waits for an instruction from the user.

When the user depresses the "Exit" button, the application 52 considers that the preselected program should be recorded. The application 52 terminates and the second OS 51 shuts down to instruct the first OS 41 to boot up through the BIOS 21A and the like (steps S38 and S39).

On the other hand, when the user depresses the "Renotice" button, the application 52 determines a renotice time based on the contents preset on the screen shown in FIG. 5 (steps S40 and S41) and repeats the process from step S35. When the user depresses the "Cancel" button, the application 52 considers that the preselected program need not be recorded and instructs the first OS 41 to clear the preselected time through the BIOS 21A (step S42).

According to the present embodiment described above, even though a user is viewing a content through an AV playback application that is executed under the control of an OS corresponding to, e.g., Linux, a user can appropriately be notified whether a preselected program is present or absent and that a preselected time is approaching. The recording of the program can be prevented from being cancelled against a user's will. In the notification, some options ("Exit," "Renotice" and "Cancel") can be presented to the user and accordingly the apparatus can be improved in usability.

In the above embodiment, the preselection of a program means recording programming. The present invention is not limited to this. It can be directed to "viewing programming" (when a preselected time reaches the present time, a channel is automatically selected to receive a program and the program is displayed on the LCD 15 such that a user can watch the program). The user can appropriately be notified whether the viewing programming is present or absent and that the preselected time is approaching. The program can thus be prevented from being cancelled against a user's will. Both "recording programming" and "viewing programming" can be adopted.

## Claims

1. An electronic apparatus including a plurality of operating systems, **characterized by** comprising:
a setting unit (42) which preselects a program to be displayed or recorded under control of a first operating system (41); and
a notifying unit (62) which makes a notification as to whether the setting unit (42) preselects the program while an application program is being executed under control of a second operating system (51).

2. The electronic apparatus according to claim 1, **characterized by** further comprising a programming information acquiring unit (61) which acquires information of a preselected time set by the setting unit (42) when the application program starts up.

3. The electronic apparatus according to claim 2, **characterized in that** the notifying unit (62) makes a notification that the program has been preselected a predetermined time before the preselected time indicated by the information acquired by the programming information acquiring unit (61) while the application program is being executed.

4. The electronic apparatus according to claim 1, **characterized in that** the application program is a playback application program (52) to play back a content including picture images.

5. The electronic apparatus according to claim 1, **characterized in that** the notifying unit (62) displays information indicative of a time interval between a present time and a preselected time on a screen when the notifying unit (62) makes the notification.

6. The electronic apparatus according to claim 1, **characterized in that** the notifying unit (62) displays information indicative of a preselected time on a screen when the notifying unit (62) makes the notification.

7. The electronic apparatus according to claim 1, **characterized in that** the notifying unit (62) makes the notification a plurality of number of times.

8. The electronic apparatus according to claim 1, **characterized by** further comprising a display setting unit (64) which displays a screen to set a time at which the notification is to be made.

9. The electronic apparatus according to claim 1, **characterized in that** the notifying unit (62) makes the notification through one of an LED and a sub-LCD.

10. The electronic apparatus according to claim 1, **characterized in that** the notifying unit (62) displays a confirmation as to whether the preselected program is to be displayed or whether the preselected program is to be recorded when the notifying unit (62) makes the notification.

11. The electronic apparatus according to claim 1, **characterized in that** the notifying unit (62) displays a confirmation as to whether the notification is to be made again.

12. The electronic apparatus according to claim 1, **characterized in that** the notifying unit (62) displays a confirmation as to whether the notification is to be ignored to cancel the program to be recorded.

13. An information notifying method applied to an electronic apparatus including a plurality of operating systems, the method **characterized by** comprising:
preselecting a program to be displayed or recorded under control of a first operating system (S13); and
making a notification as to whether the program is preselected while an application program is being executed under control of a second operating system (S37).

14. The method according to claim 13, **characterized by** further comprising acquiring information of a preselected time when the application program starts up (S32).

15. The electronic apparatus according to claim 14, **characterized by** further comprising making a notification that the program has been preselected a predetermined time before the preselected time indicated by the acquired information while the application program is being executed (S37).
